# EUROPEAN PATENT SPECIFICATION

(11) **EP 3 991 568 B1**
(45) Date of publication and mention of the grant of the patent: **06.09.2023**
(21) Application number: 20306314.4
(22) Date of filing: 03.11.2020
(51) Int. Cl.: A23J 3/14, A23J 3/16, A23J 3/22, A23J 3/26, A23L 27/10

(54) **METHOD OF FLAVORING HIGH MOISTURE EXTRUDED PLANT PROTEINS-BASED PRODUCTS**
VERFAHREN ZUM AROMATISIEREN VON EXTRUDIERTEN PRODUKTEN AUF DER BASIS VON PFLANZENPROTEINEN MIT HOHEM FEUCHTIGKEITSGEHALT
PROCÉDÉ D'AROMATISATION DE PRODUITS EXTRUDÉS À BASE DE PROTÉINES VÉGÉTALES À FORTE TENEUR EN HUMIDITÉ

(43) Date of publication of application: 04.05.2022
(73) Proprietor: Les Nouveaux Fermiers, 75009 Paris (FR)
(72) Inventor: PARUNELLA, Isabel, 75012 PARIS (FR)
(74) Representative: Lavoix

(56) References cited:
- WO-A1-2019/143859
- WO-A1-2020/089445
- WO-A1-2020/260628
- US-A1- 2014 272 094
- US-A1- 2020 060 310

## Description

The present invention concerns a method of flavoring high moisture extruded plant proteins-based products, in particular for preparing chicken breast analog products.

increasing concerns about wellbeing in ethical, social, health, and ecological aspects have resulted in an increase in the number of vegetarians. The replacement of meat protein with plant protein has therefore become an important research topic. However, meat analogues are generally different from meat in terms of texture, taste, and flavour.

Meat analogues are primarily vegetable based food products that contain proteins made from pulses (mainly soy), cereal protein, or fungi. There was a sharp increase in the consumption of these products around 2001 after a number of food safety crises (B.S.E., food and mouth disease) in the meat sector. Soon after that period, the growth in the market stabilised.

The difficulty with establishing a broad acceptance of meat analogues is probably related to several aspects. Firstly, these types of products are relatively new. Secondly, a large difference in the perceived product quality of meat and meat analogues is likely to play an important role. Both experience quality attributes such as convenience, freshness, and sensory characteristics, and credence quality attributes (e.g. healthiness) are important for consumer's buying behaviour of meat. Meat is especially appreciated for its sensory properties, its unique taste and texture. A few studies investigated consumers' evaluation of both meat and meat analogues and found that meat substitutes stayed behind in overall evaluation and in particular the sensory appreciation.

In particular, the use of plant-based proteins to produce such meat analogues often induces beany off-flavours in the final product, which is negatively perceived by the consumer. An inhomogeneous dispersion of the flavours in the product is also often observed. Indeed, this type of products generally needs the addition of flavor components to make them more similar to meat and to cover the beany off-flavors. This addition of ingredients contributing to the flavor are usually incorporated after extrusion, which means that they mostly remain on the product's surface, rendering the dispersion inhomogeneous, the product core still keeping the beany off-notes.

Some flavor companies have developed "maskers" targeting the beany off-flavor, but these components are not 100% effective and they also cannot act correctly if they are not homogeneously dispersed in the product matrix.

In order to improve this, some producers add flavor components before the extrusion process. This has however three drawbacks:
a) flavors are very volatile components that lose intensity and/or can be degraded under an extrusion process. This makes it necessary to add a second flavoring step after extrusion to successfully reach the desired product taste.
b) applying flavor components at the beginning limits the number of recipes in the following way: extrusion lines have a continuous flow and changing the recipe implies a production stop with the waste of the "transition" product (where recipe 1 is mixed with the new ingredients combination of recipe 2).
c) the input ingredients need to be changed: additional ingredient weighting and premixing is necessary.

WO 2019/143859 discloses a method comprising high-moisture extrusion cooking to produce a plant-based product, by heating and extruding a composition under a condition of high moisture, high temperature, and high shear in a cooker-extruder, and cooling the composition under laminar flow in a cooling die to form the plant-based product.

There is thus still an important need for methods enabling eliminating off-flavours present in plant-based meat analogues.

There is also an important need for methods enabling preparing a plant-based meat analogue with an homogenous flavour dispersion.

The present invention meets these needs.

The present invention arises from the unexpected finding by the inventors that it is possible to efficiently eliminate off-flavors and to obtain a meat analog with an homogenous flavor dispersion, by cleaning the high moisture extruded plant proteins conventionally used to produce meat analogues by drying them down to a water content of from 25% to 45%, and then marinating them with an aqueous marinade until said high moisture extruded plant proteins reach a water content of from 70% to 85%.

This method also has the advantage of preparing a product with a softer and juicier texture which is generally preferred by the consumer.

The present invention thus concerns a method of flavoring high-moisture extruded plant proteins-based product, comprising the steps of:
a) providing high moisture extruded plant proteins with a water content of from 30% to 70%,
b) cleaning the high moisture extruded plant proteins provided at step a) by drying them down to a water content of from 25% to 45%, thereby eliminating off-flavors,
c) marinating the dried high moisture extruded plant proteins by contacting them with 20% to 40% by weight of at least one marinade, until said high moisture extruded plant proteins reach a water content of from 70% to 85%,
thereby obtaining a flavored high-moisture extruded plant proteins-based product with reduced off-flavors.

The present invention also concerns a method for producing a chicken breast analog product, said method comprising implementing the flavoring method of the invention.

### Detailed description of the invention

### Provision of high moisture extruded plant proteins

Step a) of the method of the invention consists in providing high moisture extruded plant proteins with a water content of from 30% to 70%.

By "high moisture extruded plant proteins" is meant herein, extruded plant proteins obtained by high moisture extrusion (HME). In the HME process, the processed mass shows typically a moisture content of above 30%, more preferably above 40%.

High moisture extruded plant proteins used in the context of the invention typically have a water content of from 30% to 70%, more particularly of from 40% to 70%, still preferably 60%.

High moisture extruded plant proteins used in the context of the invention are usually made from soy flour, concentrate or isolate, but can also be made, without limitation, from pea, wheat, fava, or rice.

In a particular embodiment, said high moisture extruded plant proteins come from a plant selected from a group consisting of pea, soy, wheat, fava, rice and a mixture thereof.

In a particularly preferred embodiment, said high moisture extruded plant proteins are high moisture extruded soy proteins.

### Cleaning of the high moisture extruded plant proteins

Step b) of the method of the invention involves cleaning the high moisture extruded plant proteins provided at step a) by drying them down to a water content of from 25% to 45%, thereby eliminating off-flavors.

In a particular embodiment, the high moisture extruded plant proteins are dried down to a content of 40%.

Said drying can be implemented by any technique well-known from the skilled person, such as by application of hot air such as direct drying or convective drying, by indirect or contact drying such as drum drying or vacuum drying, by dielectric drying, by freezing and defrosting, by lyophilization, by supercritical drying or by natural air drying.

In a particular embodiment, said drying is performed by freezing and defrosting.

Preferably, said cleaning step b) comprises the steps of:
(i) freezing said high moisture extruded plant proteins at a temperature inferior or equal to -5°C, more particularly at a temperature inferior or equal to -10°C, still particularly at a temperature inferior or equal to -18°C, then
(ii) defrosting said high moisture extruded plant proteins at a temperature comprised between -2°C and 10°C, more particularly at a temperature comprised between -1°C and 5°C, still particularly at a temperature of 0°C.

In a particular embodiment, said freezing step (i) can be performed before the provision of the high moisture extruded plant proteins.

In other words, said high moisture extruded plant proteins can be provided in frozen form, and said cleaning step b) then directly comprises the defrosting step (ii) disclosed above.

The inventors demonstrated that this specific way of drying enabled eliminating water from the protein product, the water taking with it water-soluble molecules causing some characteristically off-flavors in plant-based products like polyphenolic compounds. Thereby, the beany off-flavors of the protein matrix is decreased and the structure of the matrix is further opened to be filled in, during the marinating step, with flavoring liquid.

In said particular embodiment, said cleaning step b) further comprises, after said defrosting step (ii), the steps of:
(iii) soaking said defrosted high moisture extruded plant proteins in cold water, for 1 min to 1 hour, preferably for from 10 min to 45 min, more particularly from 20 min to 30 min, and
(iv) drying said soaked high moisture extruded plant proteins by heating them at a temperature of from 30°C to 200°C, more particularly of from 50°C to 100°, most particularly of 80°C, for 20 s to 24 h, more particularly for 30 s to 12 h, still particularly for 1 min to 1 h, still particularly for 3 min to 30 min, still particularly for 5 min to 10 min, most particularly for 8 min.

By "cold water" is meant herein water at a temperature of from 0°C to 5°C.

The inventors demonstrated that this additional cleaning enhances the elimination of the off-flavors.

Preferably, said steps (iii) and (iv) are repeated 1 to 5 times.

### Marinating step

Step c) of the method of the invention consists in marinating the dried high moisture extruded plant proteins by contacting them with 20% to 40% by weight of at least one marinade, until said high moisture extruded plant proteins reach a water content of from 70% to 85%.

By "marinade" is meant herein the seasoned liquid used to soak foods in order to add flavor to the product.

Said at least one marinade preferably comprises water and/or oil, and preferably further comprises flavoring agents and/or spices and/or salt
The water can be pure water, tap water, bottled water, deionized water, spring water, natural juice (i.e. liquid based extract from a non-animal source such as a plant or any part of a plant), modified natural juice, or a mixture thereof.

By "oil" is meant herein any nonpolar chemical substance that is a viscous liquid at ambient temperatures and is both hydrophobic and lipophilic.

Suitable examples of oils include but are not limited to microbial oil, plant oil, algal oil, fungal oil, marine oil, almond oil, aloe vera oil, apricot kerne oil, avocado oil, baobab oil, calendula oil, canola oil, corn oil, cottonseed oil, evening primrose oil, grape oil, grape seed oil, hazelnut oil, jojoba oil, linseed oil, macadamia oil, natural oils, neem oil, non-hydrogenated oils, olive oil, palm oil, coconut oil, partially hydrogenated oils, peanut oil, rapeseed oil, sesame oil, soybean oil, sunflower oil, synthetic oils, vegetable oil, fatty acids suitable for human consumption (*e.g.* oils that are liquid at ambient temperature like avocado, mustard, coconut, cottonseed, fish, flax, seed, grape, olive, palm. peanut, rapeseed, safflower, sesame. soybean, sunflower; oils that are solid at ambient temperature like chocolate fat), sole fats (*e.g.* palm oil, palm kernel oil, coconut oil, cocoa butter, shea butter), soft fats (*e.g.* canola oil, soybean oil, sunflower oil, safflower oil, olive oil. nut oils), vegetable oils (*e.g.* from soy bean, corn, cotton seed, rapeseed, rice, peanut, and palm), and derivatives thereof.

As used herein, the term "flavoring agent" refers to a volatile substance that activates aroma receptors in the olfactory system
Examples of flavoring agents include but are not limited to oil soluble flavoring compounds, water soluble flavoring compounds, volatile flavoring compounds, meat-like furans, aldehydes, guaicol, 3-methyl-butanal, methional, 2--acetyl-2-thiazoline, 2-ethyl-3,5-dimethylpyrazine, 2,3-diethyl-5-methylpyrazine, 3-hydroxy-4,5-dimethyl-2(5H)-furanone, 4-hydroxy-2,5-dimethyl-3(2H)-furanone, octen-3-ol, phenyl acetic acid, 2,4-decadienal, ionone beta, trithioacetone, benzyl mercaptan, furfuryl mercaptan, methyl furfuryl disulfide, oil onion, pyrazine, ammonium sulfide, dimethyl sulfide, acetoin, methional, para cresol, phenyl acetaldehyde, isovaleraldehyde, 5-methyl-2-phenyl-5-hexenal, homofuranol, 2-methyl tetrahydrofuran-3-thiol, methyl mercaptan, furaneol, indole, precursor molecules (*i.e.* molecules that can specifically or non-specifically react with each other or other compounds to produce agents that impart or enhance flavors; e.g. Maillard reaction precursors), and combinations and derivatives thereof.

By "spice" is meant herein a seed, fruit, root, bark, or other plant substance primarily used for flavoring or coloring food. Spices are distinguished from herbs, which are the leaves, flowers, or stems of plants used for flavoring or as a garnish.

By "salt" is meant herein edible salt such as table salt.

In a particular embodiment, said at least one marinade further comprises juiciness improvers selected from the group consisting of vegetable fibers, concentrated proteins, isolated proteins, and mixtures thereof.

By "juiciness improver" is meant herein an additive enabling increasing the juiciness of a finished meat-analog product by its water-retention properties.

Examples of juiciness improvers are well-known from the skilled person and include vegetable fibers, concentrated proteins and isolated proteins.

Vegetable fibers are well-known from the skilled person and typically include hydrocolloids such as hydroxypropylmethylcellulose, guar gum, locust bean gum or cellulose powder, oligosaccharides such as inuline or polydextrose, cereal fibers such as fibers from wheat or oat, and fruit-tree fiber sources such as apple or bamboo fibers.

Concentrated proteins (or protein concentrates) can typically be from algae, lentil, pea, soy, chickpea, rice, hemp, fava bean, pigeon pea, cowpea, vital wheat gluten.

Isolated proteins (or protein isolates) can typically be from potato, soy, pea, lentil, chickpea, lupin, oat, canola, wheat.

In a particular embodiment, the dried high moisture extruded plant proteins are contacted with 20% to 25% by weight of at least one marinade as defined above.

Said contacting may be implemented by any technique well-known from the skilled person.

In a particular embodiment, said contacting is implemented in a slow rotating device, in particular a slow rotating bidirectional device, preferably with constant vacuum.

In a particular embodiment, said contacting is implemented under a slow rotating agitation, preferably at 4 to 7 rpm.

Implementation of the contacting step under a slow rotating bidirectional process has the further advantage of improving the texture of the final product, making it more similar to chicken breast meat texture.

Examples of slow rotating bidirectional devices are well-known from the skilled person and include vacuum tumblers and mixers.

In a particular embodiment, said marinating step is implemented by alternating a contacting step of said high moisture extruded plant proteins with said at least one marinade, as defined above, and a drying step of said marinated high moisture extruded plant proteins.

In a particular embodiment, said alternation of contacting and drying steps is performed 1 to 5 times.

When said alternation of contacting and drying steps is performed more than once, said at least one marinade may comprise different ingredients as defined above at different contacting steps.

In a particular embodiment, said drying step can be implemented by any technique well-known from the skilled person, such as by application of hot air such as direct drying or convective drying, by indirect or contact drying such as drum drying or vacuum drying or by natural air drying.

In a particular embodiment, said drying step is implemented by direct drying, typically in a hot dry air oven, preferably with low humidity, typically of 20% to 30%.

Said marinating step c) is preferably implemented during a duration suitable to enable the dispersion of the ingredients of the marinade into the high moisture extruded plant proteins.

Preferably, said marinating step c) is implemented during 20 min to 90 min.

At the end of the marinating step, said high moisture extruded plant proteins reach a water content of from 70% to 85%, which corresponds to a water content similar to the one of chicken meat.

Said marinating step enables obtaining a flavored high-moisture extruded plant proteins-based product.

The combination of the cleaning step a) and of the marinating step b), in particular by alternating contacting and drying steps, as defined above, enables achieving an homogeneous dispersion of the flavors in the protein matrix.

### Additional steps of the flavoring method

The method of the invention may further include, after the marinating step, additional steps typically involved in storing and packaging.

In a particular embodiment, the method of the invention further comprises a step d) of freezing said flavored high-moisture extruded plant proteins-based product.

Said freezing step can be implemented by any technique well-known from the skilled person. For example, said flavored high-moisture extruded plant proteins-based product can be frozen in a freezing tunnel, typically at a temperature lower than -18°C.

In a particular embodiment, the method of the invention further comprises a step e) of packaging said flavored high-moisture extruded plant proteins-based product under modified atmosphere.

By "modified atmosphere" is meant herein the practice of modifying the composition of the internal atmosphere of a package in order to improve the shelf life, in particular by reducing the level of oxygen and replacing it with other gases.

### Application

As shown above, the flavoring method of the invention enables obtaining a texture which is very similar to meat texture, more particularly to chicken breast meat texture.

The flavoring method of the invention is further particularly useful for producing meat analog products, more particularly chicken breast analog products.

The present invention thus also concerns a method for producing a chicken breast analog product, said method comprising implementing the flavoring method of the invention.

### Chicken breast analog product

The term "meat analogue product" as used herein refers to a food product that is not derived from an animal but has structure, texture, and/or other properties comparable to those of animal meat. The term refers to uncooked, cooking and cooked meat analogue product.

The term "chicken breast analog product" as used herein refers to a food product that is not derived from an animal but has structure, texture, and/or other properties comparable to those of chicken breast meat.

The present invention will be further illustrated by the example below.

### Example

The following example discloses the implementation of the flavoring method of the invention.
1. Reception of frozen (-17°C) high moisture extruded (HME) protein with a water content of 60%.
2. Defrosting of the protein to -2°C - 0°C in a chiller room.
3. Drying of the protein in a vacuum tumbler with a 500 kg capacity, loaded with 100 kg of HME protein. Drying is done by hot air in the tumbler at 80°C during 8 min at 10 rpm.
4. Incorporation of 300 kg of tap water in the tumbler.
5. Hydrating at 8 rpm during 8 min at 100°C under vacuum.
6. Elimination of the water and drying of the protein by hot air 90°C during 8 min.
7. Incorporation of 300 kg of water in the vacuum tumbler.
8. Hydrating at 8 rpm during 8 min at 100°C under vacuum.
9. Elimination of the water and drying of the protein by hot air 90°C during 8 min at 10 rpm.
10. Incorporation of 300 kg of brine in the vacuum tumbler and marinating at 2 rpm during 18 minutes under vacuum. (The brine is prepared in a liquid mixer and it contains 94% of water, 1% of salt and 5% of flavor components).
11. Elimination of the excess brine and incorporation of 15 kg marinade. (The marinade is prepared in a liquid mixer and it contains 30% of olive oil, 25% of water, 45% of flavors and spices).
12. Marinating at 3 rpm during 25 minutes under vacuum cooling until reaching a temperature of 10°C.

## Claims

1. Method of flavoring high-moisture extruded plant proteins-based product, comprising the steps of:
a) providing high moisture extruded plant proteins with a water content of from 30% to 70%,
b) cleaning the high moisture extruded plant proteins provided at step a) by drying them down to a water content of from 25 % to 45%, thereby eliminating off-flavors,
c) marinating the dried high moisture extruded plant proteins by contacting them with 20% to 40% by weight of at least one marinade, until said high moisture extruded plant proteins reach a water content of from 70% to 85%,
thereby obtaining a flavored high-moisture extruded plant proteins-based product with reduced off-flavors.

2. The method according to claim 1, wherein said high moisture extruded plant proteins come from a plant selected from a group consisting of pea, soy, wheat, fava, rice and a mixture thereof.

3. The method according to claim 1 or 2, wherein said high moisture extruded plant proteins are high moisture extruded soy proteins.

4. The method according to any one of claims 1 to 3, wherein said cleaning step b) comprises the steps of:
(i) freezing said high moisture extruded plant proteins at a temperature inferior or equal to -5°C, then
(ii) defrosting said high moisture extruded plant proteins at a temperature comprising between -2°C and 10°C.

5. The method according to claim 4, wherein said cleaning step b) further comprises, after said defrosting step (ii), the steps of:
(iii) soaking said defrosted high moisture extruded plant proteins in cold water, for 1 min to 1 hour, and
(iv) drying said soaked high moisture extruded plant proteins by heating them at a temperature of from 30°C to 200°C for 20 s to 24 h.

6. The method according to claim 5, wherein said steps (iii) and (iv) are repeated 1 to 5 times.

7. The method according to any one of clams 1 to 6, wherein said contacting of said dried high moisture extruded plant proteins with said at least one marinade during the marinating step c) is implemented in a slow rotating bidirectional device with constant vacuum.

8. The method according to any one of claims 1 to 7, wherein said marinating step c) is implemented during 20 min to 90 min.

9. The method according to any one of claims 1 to 8, wherein said at least one marinade comprises water and oil, and further comprises flavoring agents and/or spices and/or salt.

10. The method according to any one of claims 1 to 9, wherein said at least one marinade further comprises juiciness improvers selected from the group consisting of vegetable fibers, concentrated proteins, isolated proteins, and mixtures thereof.

11. The method according to any one of claims 1 to 10, wherein said marinating step is implemented by alternating, 1 to 5 times, a contacting step of said high moisture extruded plant proteins with said at least one marinade and a drying step of said marinated high moisture extruded plant proteins.

12. The method according to claim 11, wherein said at least one marinade comprises different ingredients at different contacting steps.

13. The method according to any one of claims 1 to 12, wherein said method further comprises a step d) of freezing said flavored high-moisture extruded plant proteins-based product.

14. The method according to any one of claims 1 to 13, wherein said method further comprises a step e) of packaging said flavor high-moisture extruded plant proteins-based product under modified atmosphere.

15. Method for producing a chicken breast analog product, said method comprising implementing the flavoring method according to any one of claims 1 to 14.

## Patentansprüche

1. Verfahren zum Aromatisieren eines extrudierten Produkts auf Pflanzenproteinbasis mit hohem Feuchtigkeitsgehalt, umfassend die folgenden Schritte:
a) Bereitstellen von extrudierten Pflanzenproteinen mit hohem Feuchtigkeitsgehalt mit Wassergehalt von 30 bis 70 %,
b) Reinigen der in Schritt a) bereitgestellten extrudierten Pflanzenproteine mit hohem Feuchtigkeitsgehalt durch Trocknen auf einen Wassergehalt von 25 % bis 45 %, wodurch Fehlaromen eliminiert werden,
c) Marinieren der getrockneten extrudierten Pflanzenproteine mit hohem Feuchtigkeitsgehalt, indem sie mit 20 bis 40 Gewichtsprozent mindestens einer Marinade in Kontakt gebracht werden, bis die extrudierten Pflanzenproteine mit hohem Feuchtigkeitsgehalt einen Wassergehalt von 70 bis 85 % erreichen, wodurch ein aromatisiertes Produkt auf der Basis von extrudierten Pflanzenproteinen mit hohem Feuchtigkeitsgehalt mit verringerten Fehlaromen erlangt wird.

2. Verfahren nach Anspruch 1, wobei die extrudierten Pflanzenproteine mit hohem Feuchtigkeitsgehalt aus einer Pflanze stammen, die ausgewählt ist aus einer Gruppe, die aus Erbsen, Soja, Weizen, Fava, Reis und einem Gemisch davon besteht.

3. Verfahren nach Anspruch 1 oder 2, wobei die extrudierten Pflanzenproteine mit hohem Feuchtigkeitsgehalt extrudierte Sojaproteine mit hohem Feuchtigkeitsgehalt sind.

4. Verfahren nach einem der Ansprüche 1 bis 3, wobei der Reinigungsschritt b) die folgenden Schritte umfasst:
(i) Einfrieren der extrudierten Pflanzenproteine mit hohem Feuchtigkeitsgehalt bei einer Temperatur unter oder gleich -5 °C, dann
(ii) Auftauen der extrudierten Pflanzenproteine mit hohem Feuchtigkeitsgehalt bei einer Temperatur zwischen -2 °C und 10 °C.

5. Verfahren nach Anspruch 4, wobei der Reinigungsschritt b) nach dem Auftauschritt (ii) ferner die folgenden Schritte umfasst:
(iii) Einweichen der aufgetauten extrudierten Pflanzenproteine mit hohem Feuchtigkeitsgehalt in kaltem Wasser über 1 Minute bis 1 Stunde, und
(iv) Trocknen der eingeweichten, extrudierten Pflanzenproteine mit hohem Feuchtigkeitsgehalt durch Erhitzen auf eine Temperatur von 30 °C bis 200 °C über 20 Sekunden bis 24 Stunden.

6. Verfahren nach Anspruch 5, wobei die Schritte (iii) und (iv) 1 bis 5 Mal wiederholt werden.

7. Verfahren nach einem der Ansprüche 1 bis 6, wobei das Inkontaktbringen der getrockneten, extrudierten Pflanzenproteine mit hohem Feuchtigkeitsgehalt mit der mindestens einen Marinade während des Marinierschritts c) in einer langsam drehenden bidirektionalen Vorrichtung mit konstantem Vakuum implementiert wird.

8. Verfahren nach einem der Ansprüche 1 bis 7, wobei der Marinierschritt c) während 20 Minuten bis 90 Minuten implementiert wird.

9. Verfahren nach einem der Ansprüche 1 bis 8, wobei die mindestens eine Marinade Wasser und Öl umfasst und ferner Geschmacksstoffe und/oder Gewürze und/oder Salz umfasst.

10. Verfahren nach einem der Ansprüche 1 bis 9, wobei die mindestens eine Marinade ferner Saftigkeitsverbesserer umfasst, ausgewählt aus der Gruppe, bestehend aus pflanzlichen Fasern, konzentrierten Proteinen, isolierten Proteinen und Gemischen davon.

11. Verfahren nach einem der Ansprüche 1 bis 10, wobei der Marinierschritt implementiert wird, indem 1 bis 5 Mal ein Schritt eines Inkontaktbringens der extrudierten Pflanzenproteine mit hohem Feuchtigkeitsgehalt mit der mindestens einen Marinade und ein Schritt eines Trocknens der marinierten extrudierten Pflanzenproteine mit hohem Feuchtigkeitsgehalt abgewechselt werden.

12. Verfahren nach Anspruch 11, wobei die mindestens eine Marinade verschiedene Zutaten in verschiedenen Schritten eines Inkontaktbringens umfasst.

13. Verfahren nach einem der Ansprüche 1 bis 12, wobei das Verfahren ferner einen Schritt d) eines Einfrierens des aromatisierten extrudierten Produkts auf Pflanzenproteinbasis mit hohem Feuchtigkeitsgehalt umfasst.

14. Verfahren nach einem der Ansprüche 1 bis 13, wobei das Verfahren ferner einen Schritt e) eines Verpackens des aromatisierten extrudierten Produkts auf Pflanzenproteinbasis unter modifizierter Atmosphäre umfasst.

15. Verfahren zur Herstellung eines analogen Hühnerbrustprodukts, das Verfahren umfassend ein Implementieren des Aromatisierungsverfahrens nach einem der Ansprüche 1 bis 14.

## Revendications

1. Procédé d'aromatisation d'un produit à base de protéines végétales extrudées à haute teneur en humidité, comprenant les étapes consistant à :
a) fournir des protéines végétales extrudées à haute teneur en humidité ayant une teneur en eau de 30 % à 70 %,
b) nettoyer les protéines végétales extrudées à haute teneur en humidité fournies à l'étape a) par séchage de celles-ci jusqu'à une teneur en eau de 25 % à 45 %, pour ainsi éliminer les défauts d'arôme,
c) mariner les protéines végétales extrudées à haute teneur en humidité séchées par leur mise en contact avec 20 % à 40 % en poids d'au moins une marinade, jusqu'à ce que lesdites protéines végétales extrudées à haute teneur en humidité atteignent une teneur en eau de 70 % à 85 %, pour ainsi obtenir un produit à base de protéines végétales extrudées à haute teneur en humidité aromatisé avec des défauts d'arôme réduits.

2. Procédé selon la revendication 1, dans lequel lesdites protéines végétales extrudées à haute teneur en humidité proviennent d'un végétal choisi dans le groupe constitué par le pois, le soja, le blé, la féverole, le riz et un mélange de ceux-ci.

3. Procédé selon la revendication 1 ou 2, dans lequel lesdites protéines végétales extrudées à haute teneur en humidité sont des protéines de soja extrudées à haute teneur en humidité.

4. Procédé selon l'une quelconque des revendications 1 à 3, dans lequel ladite étape de nettoyage b) comprend les étapes consistant à :
(i) congeler lesdites protéines végétales extrudées à haute teneur en humidité à une température inférieure ou égale à -5 °C, puis
(ii) décongéler lesdites protéines végétales extrudées à haute teneur en humidité à une température comprise entre -2 °C et 10 °C.

5. Procédé selon la revendication 4, dans lequel ladite étape de nettoyage b) comprend en outre, après ladite étape de décongélation (ii), les étapes consistant à :
(iii) faire tremper lesdites protéines végétales extrudées à haute teneur en humidité décongelées dans de l'eau froide, pendant 1 minute à 1 heure, et
(iv) sécher lesdites protéines végétales extrudées et à haute teneur en humidité trempées par chauffage de celles-ci à une température de 30 °C à 200 °C pendant 20 s à 24 h.

6. Procédé selon la revendication 5, dans lequel lesdites étapes (iii) et (iv) sont répétées 1 à 5 fois.

7. Procédé selon l'une quelconque des revendications 1 à 6, dans lequel ladite mise en contact desdites protéines végétales extrudées à haute teneur en humidité séchées avec ladite au moins une marinade pendant de l'étape de marinage c) est mise en oeuvre dans un dispositif bidirectionnel à rotation lente et à vide constant.

8. Procédé selon l'une quelconque des revendications 1 à 7, dans lequel ladite étape de marinage c) est mise en oeuvre pendant 20 minutes à 90 minutes.

9. Procédé selon l'une quelconque des revendications 1 à 8, dans lequel ladite au moins une marinade comprend de l'eau et de l'huile, et comprend en outre des agents aromatisants et/ou des épices et/ou du sel.

10. Procédé selon l'une quelconque des revendications 1 à 9, dans lequel ladite au moins une marinade comprend en outre des agents d'amélioration dejutosité choisis dans le groupe constitué par des fibres végétales, des protéines concentrées, des protéines isolées, et des mélanges de celles-ci.

11. Procédé selon l'une quelconque des revendications 1 à 10, dans lequel ladite étape de marinage est mise en oeuvre par alternance, 1 à 5 fois, d'une étape de mise en contact desdites protéines végétales extrudées à haute teneur en humidité avec ladite au moins une marinade et d'une étape de séchage desdites protéines végétales extrudées à haute teneur en humidité marinées.

12. Procédé selon la revendication 11, dans lequel ladite au moins une marinade comprend des ingrédients différents à des étapes de mise en contact différentes.

13. Procédé selon l'une quelconque des revendications 1 à 12, dans lequel ledit procédé comprend en outre une étape d) consistant à congeler ledit produit à base de protéines végétales extrudées à haute teneur en humidité aromatisé.

14. Procédé selon l'une quelconque des revendications 1 à 13, dans lequel ledit procédé comprend en outre une étape e) consistant à conditionner ledit produit à base de protéines végétales extrudées à haute teneur en humidité aromatisé sous atmosphère modifiée.

15. Procédé de production d'un produit analogue au blanc de poulet, ledit procédé comprenant la mise en oeuvre du procédé d'aromatisation selon l'une quelconque des revendications 1 à 14.
